**Europäisches Patentamt**

**European Patent Office**

**Office européen des brevets**

(19)

(11) Veröffentlichungsnummer: **0 255 171 B1**

# EUROPÄISCHE PATENTSCHRIFT

(12)

(45) Veröffentlichungstag der Patentschrift:
27.02.91 Patentblatt 91/09

(51) Int. Cl.⁵: **B62D 1/04**

(21) Anmeldenummer: **87201371.9**

(22) Anmeldetag: **17.07.87**

(54) **Lenkrad.**

(30) Priorität: **26.07.86 DE 3625372**

(43) Veröffentlichungstag der Anmeldung:
**03.02.88 Patentblatt 88/05**

(45) Bekanntmachung des Hinweises auf die
Patenterteilung:
**27.02.91 Patentblatt 91/09**

(84) Benannte Vertragsstaaten:
**DE ES FR GB IT SE**

(56) Entgegenhaltungen:
**EP-A- 0 105 535**
**EP-A- 0 146 959**
**DE-U- 7 531 072**
**FR-A- 2 491 231**
**FR-A- 2 535 275**
**GB-A- 1 582 846**

(73) Patentinhaber: **KOLBENSCHMIDT**
**Aktiengesellschaft**
**Karl-Schmidt-Strasse 8/12 Postfach 1351**
**D-7107 Neckarsulm (DE)**
Patentinhaber: **AUDI AG**
**Auto-Union-Strasse 1 Postfach 220**
**D-8070 Ingolstadt (DE)**

(72) Erfinder: **Haldenwanger, Hans Günther**
**Behaimstrasse 16 a**
**D-8070 Ingolstadt (DE)**
Erfinder: **Reim, Herwig**
**Lindelweg 23**
**D-8079 Buxheim (DE)**
Erfinder: **Bieber, Klaus**
**Kammühlweg 74 a**
**D-8074 Gaimersheim (DE)**
Erfinder: **Kersten, Hartmut**
**Nestroystrasse 33 a**
**D-8070 Ingolstadt (DE)**
Erfinder: **Grothe, Klaus**
**Aschaffenburger Strasse 127**
**D-8750 Aschaffenburg (DE)**
Erfinder: **Kreuzer, Martin**
**Wendelinusweg 2**
**D-8751 Kleinwallstadt (DE)**
Erfinder: **Hartmann, Peter**
**Sonnenstrasse 52**
**D-8752 Waldaschaff (DE)**

(74) Vertreter: **Rieger, Harald, Dr.**
**Reuterweg 14**
**D-6000 Frankfurt a.M. (DE)**

EP 0 255 171 B1

## Beschreibung

Die Erfindung betrifft ein Lenkrad, dessen Kranz sowie die aus thermoplastischem Kunststoff bestehenden Nabe und Speichen mit einer Schicht eines verformbaren Kunststoffes ummantelt sind.

Ein solches, beispielsweise aus dem DE-GM 75 31 072 bekanntes Lenkrad hat verglichen mit einem herkömmlichen Lenkrad mit einem Metallskelett ein vergleichsweise niedriges Gewicht. Durch die Senkung des Gewichts von Bauteilen von Kraftfahrzeugen kann der Kraftstoffverbrauch verringert und somit ein Teil zur Energieeinsparung geleistet werden. Darüber hinaus werden durch den Einsatz eines gewichtserleichterten Lenkrades kleinere oszillierende und rotatorische Massen erreicht und somit im Hinblick auf die gestiegenen Komfortansprüche ein günstigeres Schwingungsverhalten erzielt. Als Nachteil hat sich jedoch herausgestellt, daß die aus thermoplastischen Kunststoffen gefertigten Lenkräder nicht den gestellten hohen Anforderungen an die Temperatursteifigkeit, -festigkeit und -schlagzähigkeit, insbesondere im Bereich des Lenkradkranzes, vollauf genügen. Eine weitere Schwierigkeit ist in diesem Zusammenhang, die bei der Lenkbewegung entstehenden Drehmomente sicher über die Nabe auf die Lenksäule zu übertragen.

Für den Lenkradhersteller besteht daher die Aufgabe, ein leichtes Lenkrad zu entwickeln, das der zeitgemäßen Kraftfahrzeugtechnik angepaßt ist. Eine Gewichtsreduzierung darf dabei jedoch nicht zu Lasten der Betriebssicherheit gehen.

Die Lösung dieser Aufgabe besteht in einem Lenkrad, bei dem die Nabe und die Speichen aus mit 10 bis 25 Gew.% Elastomerem und 30 bis 50 Gew.% Fasern modifiziertem Polyamid und der Lenkradkranz je nach gewünschtem Massenträgheitsmoment aus Stahl, Leichtmetall oder aus gewickelten in Kunststoff eingebetteten Endlosglasfasern bestehen. Bei einem derart aufgebauten Lenkrad läßt sich u.a. aufgrund der Variabilität der Drehmasse (Massenträgheitsmoment) ein optimales Verhältnis von Gewichtsreduzierung, Bedienungskomfort und Betriebssicherheit erreichen, wobei das Elastomere dafür sorgt, daß im Falle eines Unfalls die notwendige plastische Verformbarkeit der Kunststoffteile auch bei Minustemperaturen gewährleistet ist (Erhöhung der Kälteschlagzähigkeit).

Zweckmäßigerweise werden für das Elastomere ein oder mehrere der Stoffe EPM, EPDM, Polyäthylen, Butadien und Naturkautschuk verwendet. Unter EPM ist dabei ein gesättigter Ethylen-Propylen-Kautschuk zu verstehen, während EPDM ein ungesättigter Ethylen-Propylen-Kautschuk ist, der als Terkomponente Diene enthält. Als Fasern kommen Glasfasern, Aramidfasern, Kohlefasern oder Whisker in Betracht.

Für die Gestaltung des Lenkradkranzes kommen eine Vielzahl von Variationsmöglichkeiten in Betracht. Neben den genannten Werkstoffen, wobei als Leichtmetall beispielsweise eine Aluminiumlegierung in Frage käme, ist denkbar, den Querschnitt des Lenkradkranzes aus Vollmaterial oder aber als unterschiedlich profiliertes Rohr zu gestalten. Der Querschnitt kann dabei rund, rechteckig, quadratisch, vieleckförmig, trapezförmig usw. gestaltet sein. Dabei hat sich aufgrund entsprechender Versuchsergebnisse empfohlen, die Gestaltung in der Weise vorzunehmen, daß in Abhängigkeit von dem Pahrzeugtyp Massenträgheitsmomente in den Bereichen von etwa $2 \times 10^{-2}$ bis $4 \times 10^{-2}$ kg m² (200 bis 400 kg cm²) erreicht werden. Der optimale Wert ist abhängig von den technischen Gegebenheiten des Kraftfahrzeuges und hat stets zum Ziel, oszillierende Vertikalschwingungen des Lenkrades sowie andere Vibrationen so gering wie möglich zu halten und nach einem Lenkradeinschlag, z.B. bei Kurvenfahrt, eine optimale Zurückführung in die Null-Stellung ohne Überschwingungen zu gewährleisten. Durch eine solche Optimierung kann ggf. auf den üblicherweise einzusetzenden Lenkungsdämpfer zur Vermeidung von Drehschwingungen verzichtet werden. Wird für den Lenkradkranz ein Faserverbundwerkstoff gewählt, so empfiehlt sich als Kunststoffmatrix für die darin einzubettenden Endlosglasfasern die Verwendung von Epoxid-, Vinylester- oder Polyesterharz. Für den Fasergehalt empfiehlt sich ein Bereich von 60 bis 80 Gew.%, vorzugsweise etwa 75 Gew.%. Die Herstellung erfolgt vorzugsweise in bezüglich des Faserverlaufes unidirektionaler Endlos-Wickeltechnik.

Um die Biegefestigkeit der Speichen zu verbessern, besitzen diese vorzugsweise ein U-förmiges lenksäulenseitig offenes Profil, das durch ein Netzwerk von unter 45° zur Fahrtrichtungsachse verlaufende Rippen verstärkt ist. Damit ergibt sich eine optimale Torsionsund Biegesteifigkeit. Im Falle einer bei einem Unfall entstehenden Belastung ergibt sich die höchste Belastung als Druckbelastung in den Schenkeln des U-förmigen Profils, so daß diese bei Überbelastung ausbeulen und dadurch eine Energieumwandlung durch Formänderungsarbeit bewirkt wird. Die Verstärkungsrippen sind so angeordnet, daß an jedem Punkt die gleiche Biegebeanspruchung gegeben ist.

Zweckmäßigerweise sind im Hinblick auf die Sicherheit der Kranz, die Speichen und die Nabe des Lenkrades mit Polyurethanschaum ummantelt.

Wenn die Lenkradsäule an ihrem oberen Ende eine Kerbverzahnung aufweist, ist es mit Rücksicht auf die Übertragung von Drehmomenten angebracht, wenn in der Kunststoffnabe ein auf die Lenksäule aufschiebbares Metallteil eingebettet ist. Dieses Metallteil wird zweckmäßigerweise zur Stromführung für die

EP 0 255 171 B1

im Lenkrad angebrachte Hupe benutzt.

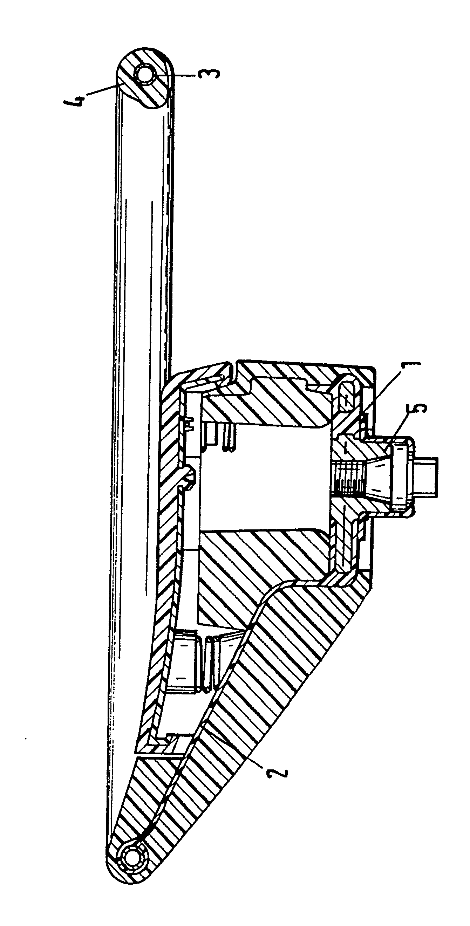

Das erfindungsgemäß ausgebildete Lenkrad ist in der Zeichnung beispielhaft dargestellt und wird nachfolgend näher erläutert.

Bei dem im Querschnitt dargestellten Lenkrad bestehen in einer vorzugsweisen Ausführungsform Nabe (1) und Speichen (2) aus Polyamid, das etwa 20 Gew.% Elastomeres und 40 Gew.% Glasfasern enthält. Die Nabe (1) und die Speichen (2) sind durch "injection molding" und dabei gleichzeitig die Speichen (2) um einen aus Stahlrohr bestehenden Lenkradkranz (3) gegossen worden. Anschließend sind Nabe (1), Speichen (2) und Lenkradkranz (3) mit einer plastisch verformbaren Polyurethanschaumschicht (4) ummantelt worden. In der Nabe (1) ist ein auf die Lenksäule aufschiebbares Metallteil (5) eingebettet. Die für ein Lenkrad relevanten mechanisch-technologischen Eigenschaften des modifizierten Polyamid (1, 2) ergeben sich wie folgt :

## Eigenschaftsrichtwerte bei 23°C, trocken

| Eigenschaft | Einheit | | Werte |
|---|---|---|---|
| Reißfestigkeit | $Nmm^{-2}$ | | 166 |
| Reißdehnung | % | | 6,4 |
| Elastizitätsmodul (Zug) | $Nmm^{-2}$ | | 10 680 |
| Schlagzähigkeit | $KJm^{-2}$ | | 79 |
| Izod-Kerbschlagzähigkeit (A) | $Jm^{-1}$ | | 253 |
| Schädigungsarbeit $W_{50}$ (1,5 mm Testk.) | Nm | +23° −20° −40° | 24 9 6 |
| Dichte | $gcm^{-3}$ | | 1,41 |
| Schwindung (TK-1,5, Formtemp. 60°C) | % längs quer | | 0,3 0,4 |
| Verarbeitungstemperaturbereich | °C | | 280-300°C |
| Lin. Wärmeausdehnungskoeffizient | $K^{-1} \times 10^{-5}$ | | 1-2 |

## Ansprüche

1. Lenkrad, dessen Kranz sowie die aus thermoplastischem Kunststoff bestehenden Nabe und Speichen mit einer Schicht eines verformbaren Kunststoffes ummantelt sind, dadurch gekennzeichnet, daß Nabe (1) und Speichen (2) aus mit 10 bis 25 Gew.% Elastomerem und 30 bis 50 Gew.% Fasern modifiziertem Polyamid und der Lenkradkranz (3) je nach dem gewünschten Massenträgheitsmoment aus Stahl, Leichtmetall oder aus gewickelten in Kunststoff eingebetteten Endlosglasfasern bestehen.

2. Lenkrad nach Anspruch 1, dadurch gekennzeichnet, daß das Elastomere aus einem oder mehreren der Stoffe EPM, EPDM, Polyäthylen, Butadien oder Naturkautschuk besteht.

3. Lenkrad nach Anspruch 1, dadurch gekennzeichnet, daß als Fasern Glasfasern, Aramidfasern, Kohlefasern oder Whisker eingesetzt sind.

4. Lenkrad nach Anspruch 1, dadurch gekennzeichnet, daß Nabe (1) und Speichen (2) vorzugsweise aus mit etwa 20 Gew.% Elastomerem und etwa 40 Gew.% Glasfasern modifiziertem Polyamid bestehen.

3

5. Lenkrad nach Anspruch 1, dadurch gekennzeichnet, daß die Speichen (2) ein U-förmiges lenksäulenseitig offenes Profil, das durch ein Netzwerk von unter 45° zur Fahrtrichtungsachse verlaufenden Rippen verstärkt ist, besitzen.

6. Lenkrad nach Anspruch 1, dadurch gekennzeichnet, daß der Lenkradkranz (3), die Speichen (2) und die Nabe (1) mit einer Schicht aus Polyurethanschaum ummantelt sind.

7. Lenkrad nach Anspruch 1, dadurch gekennzeichnet, daß in die Nabe (1) ein auf die Lenksäule aufschiebbares Metallteil (5) eingebettet ist, welches der Drehmomentübertragung dient und die elektrische Stromführung für die Hupe übernehmen kann.

8. Lenkrad nach Anspruch 1, dadurch gekennzeichnet, daß der Lenkradkranz (3) im Querschnitt wahlweise aus Vollmaterial oder rohrförmig und dabei mit runder, rechteckiger, trapezförmiger oder vieleckförmiger Profilierung hergestellt sein kann.

9. Lenkrad nach Anspruch 1, dadurch gekennzeichnet, daß bei einem Lenkradkranz (3) aus gewickelten in Kunststoff eingebetteten Endlosglasfasern der Fasergehalt 60 bis 80 Gew.%, vorzugsweise etwa 75 Gew.% beträgt und als Kunststoff-Matrix Epoxid- oder Vinylester-Harz verwendet wird.

## Claims

1. Steering wheel, the rim of which and the hub and spokes which are made of thermoplastic material are covered with a layer of a deformable plastic, characterised in that the hub (1) and the spokes (2) are made of polyamide modified with 10 to 25% elastomer and 30 to 50% fibres and the steering wheel rim (3) is made of steel, light metal or of coiled endless glass fibres embedded in plastic, depending on the desired mass moment of inertia.

2. Steering wheel according to Claim 1, characterised in that the elastomer consists of one or more of the materials EPM, EPDM, polyethylene, butadiene or natural rubber.

3. Steering wheel according to Claim 1, characterised in that glass fibres, aramide fibres, carbon fibres or whiskers are used as fibres.

4. Steering wheel according to Claim 1, characterised in that the hub (1) and spokes (2) are preferably made of polyamide modified with approximately 20% by weight elastomer and approximately 40% by weight glass fibres.

5. Steering wheel according to Claim 1, characterised in that the spokes (2) have a U-shaped profile which is open on the steering column side, which profile is reinforced by a network of ribs extending at 45° to the axis of the direction of travel.

6. Steering wheel according to Claim 1, characterised in that the steering wheel rim (3), the spokes (2) and the hub (1) are covered with a layer of polyurethane foam.

7. Steering wheel according to Claim 1, characterised in that a metal part (5) which can be pushed onto the steering column is embedded in the hub (1), which part serves for torque transmission and can take over the electric power supply for the horn.

8. Steering wheel according to Claim 1, characterised in that the steering wheel rim (3) in cross-section can selectively be made of solid material or be tubular and in so doing with round, rectangular, trapezoidal or polygonal profiling.

9. Steering wheel according to Claim 1, characterised in that for a steering wheel rim (3) of coiled endless glass fibres embedded in plastic the fibre content is 60 to 80% by weight, preferably about 75% by weight, and epoxy resin or vinyl ester resin is used as the plastic matrix.

## Revendications

1. Volant, dont la couronne ainsi que le moyeu et les rayons, réalisés en une matière thermoplastique, sont enveloppés par une couche d'une matière plastique déformable, caractérisé par le fait que le moyeu (1) et les rayons (2) sont constitués par un polyamide modifié par 10 à 25% en poids d'un élastomère et par 30 à 50% en poids de fibres, et qu'en fonction du moment d'inertie de masse désiré, la couronne (3) du volant est formée par de l'acier, un métal léger ou des fibres de verre continues bobinées et noyées dans une matière plastique.

2. Volant suivant la revendication 1, caractérisé par le fait que l'élastomère est constitué par une ou plusieurs des substances : EPM, EPDM, polyéthylène, butadiène ou caoutchouc naturel.

3. Volant suivant la revendication 1, caractérisé par le fait qu'on utilise, comme fibres, des fibres de verre, des fibres d'aramide, des fibres de carbone ou des whiskers.

4. Volant suivant la revendication 1, caractérisé par le fait que le moyeu (1) et les rayons (2) sont constitués de préférence par un polyamide modifié par environ 20% en poids d'un élastomère et par environ 40% en poids de fibres de verre.

5. Volant suivant la revendication 1, caractérisé par le fait que les rayons (2) possèdent un profil en forme de U ouvert en direction de la colonne de direction et qui est renforcé par un réseau de nervures faisant un angle de 45° par rapport à l'axe de la direction de déplacement.

6. Volant suivant la revendication 1, caractérisé par le fait que la couronne (3) du volant, les rayons (2) et le moyeu (1) sont enveloppés par une couche de mousse de polyuréthane.

7. Volant suivant la revendication 1, caractérisé par le fait que dans le moyeu (1) est encastrée une pièce métallique (5), qui peut être emmanchée sur la colonne de direction, sert à transmettre le moment de rotation et peut loger l'alimentation en courant électrique pour l'avertisseur.

8. Volant suivant la revendication 1, caractérisé par le fait que la couronne (3) du volant peut être réalisée au choix par un matériau plein ou avec une forme tubulaire, en coupe transversale, et posséder un profil circulaire, rectangulaire, trapézoïdal ou polygonal.

9. Volant suivant la revendication 1, caractérisé par le fait que dans le cas d'une couronne (3) du volant formée par des fibres de verre infinies enroulées et noyées dans une matière plastique, le contenu en fibres est compris entre 60 et 80% en poids et égal de préférence à environ 75% en poids et qu'on utilise comme matrice de matière plastique, une résine époxy ou une résine d'ester vinylique.